# EUROPEAN PATENT SPECIFICATION

(11) **EP 3 356 784 B1**
(45) Date of publication and mention of the grant of the patent: **08.03.2023**
(21) Application number: 16787922.0
(22) Date of filing: 30.09.2016
(51) Int. Cl.: G01N 1/22, H01J 49/00

(54) **APPARATUS AND METHOD FOR GASEOUS FLUID SAMPLING**
VORRICHTUNG UND VERFAHREN ZUR PROBENAHME EINES GASFÖRMIGEN FLUIDS
APPAREIL ET PROCÉDÉ POUR ÉCHANTILLONNAGE DE FLUIDE GAZEUX

(30) Priority: 30.09.2015 GB 201517310
(43) Date of publication of application: 08.08.2018
(73) Proprietor: Smiths Detection-Watford Limited, Hemel Hempstead Hertfordshire HP2 7DE (GB)
(72) Inventor: KIRKBY, Oliver, Hemel Hempstead, Hertfordshire HP2 7DE (GB); CLARK, Alastair, Hemel Hempstead, Hertfordshire HP2 7DE (GB); GRANT, Bruce Alec Colin, Hemel Hempstead, Hertfordshire HP2 7DE (GB)
(74) Representative: Leach, Sean Adam
(86) International application number: PCT/GB2016/053055
(87) International publication number: WO 2017/055870

(56) References cited:
- WO-A1-2013/004903
- WO-A1-2015/145132
- US-A1- 2004 227 073
- US-A1- 2012 080 593

## Description

The present disclosure relates to detection methods and apparatus, and more particularly to methods and apparatus for obtaining samples for detectors, still more particularly to methods and apparatus for obtaining samples of vapours in the presence of particulates, these methods and apparatus may find particular application in spectrometry, for example ion mobility spectrometry and mass spectrometry.

Some detectors operate by "inhaling" a stream of fluid, such as air, into a detector inlet and sampling that air with an analytical apparatus to detect substances of interest. That inhaled stream of air can be sampled from the detector inlet using a sampling inlet such as a pinhole, capillary or membrane inlet.

Often, hand held, or portable devices may be needed for example for use by military and security personnel. These personnel frequently operate in hostile environments in the presence of large quantities of dust and grit and other particulate matter. Such particulates may obstruct the sampling inlet, or otherwise damage the detector. In some cases, particulates carried by the stream of air may comprise substances to which the detector is sensitive. If these accumulate in a detector or its inlets they may contaminate the detector, and may cause recovery time issues.

US 2004/227073 discloses a heated vortex sampling nozzle.

US2012080593 discloses a cyclone separator connected to a mass analyser which generates a swirling flow pushing particulate matter towards an exhaust port.

Aspects and embodiments of the present disclosure aim to address related technical problems.

Embodiments of the disclosure will now be described, by way of example only, with reference to the accompanying drawings, in which:
Figure 1a shows a schematic illustration of a detector inlet;
Figure 1b illustrates a spatial distribution of particulates along line 'A' shown in Figure 1a;
Figure 1c shows a schematic illustration of a detector inlet;
Figure 2 shows a cross section of the detector inlet of Figure 1a;
Figure 3a shows a schematic illustration of a detector inlet having a cylindrical flow passage;
Figure 3b illustrates a spatial distribution of particulates along the line 'B' in Figure 3a;
Figure 4 shows a cross section of the detector inlet of Figure 3a at the line 'B' in Figure 3b;
Figure 5 illustrates an example of a detector with the detector inlet of Figure 1a;
Figure 6 illustrates an example of a detector with the detector inlet of Figure 3a;
Figure 7 illustrates another example of a detector with the detector inlet of Figure 1a; and
Figure 8 illustrates another example of a detector with the detector inlet of Figure 3a.

In the drawings like reference numerals are used to indicate like elements.

Embodiments of the disclosure relate to detector inlets for providing samples to an analytical apparatus for detecting samples of interest. Such detectors may obtain samples by first inhaling a flow of gaseous fluid, such as air carrying particulates, vapour and aerosols. Samples may then be taken from this flow. According to the present invention, a pinhole inlet is used to take these samples and to provide them into a detector to enable a substance of interest to be detected.

The particulates entrained in such an inhaled flow may be spatially distributed homogeneously throughout the inhaled flow. The presence of such particulates may lead to contamination of the detector or blockage of the sampling inlet. Embodiments of the disclosure aim to enable sampling of the vapour while inhibiting particulates from entering or clogging the sampling inlet. This may be achieved by inducing a circulatory flow which encircles (e.g. surrounds) a region from which samples can be obtained (e.g. by a sampling inlet of a detector). In this region the relative number of particulates is depleted because the otherwise largely homogeneous spatial distribution is modified by the centrifuge effect of this circulatory flow.

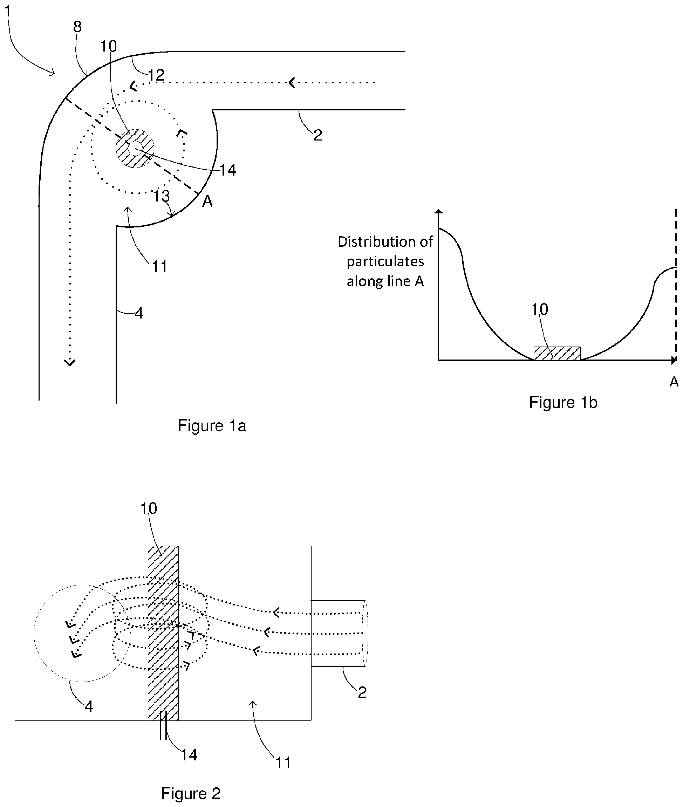

The present disclosure explains a number of ways in which this can be achieved. Figure 1a shows a detector inlet that is configured to operate in this fashion.

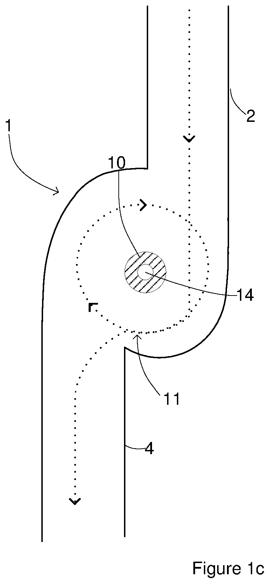

Figure 1a shows a detector inlet 1 comprising a flow inlet 2, a flow outlet 4 and a plenum 11. The plenum 11 comprises a wall 8 having an inner surface 12. A sampling inlet 14, such as a pinhole, is arranged to obtain samples from a sampling volume 10 in the plenum. Figure 2 shows a cross sectional view of the detector inlet 1 of Figure 1a. It can be seen in Figure 2 that the sampling inlet can be arranged to collect samples of gaseous fluid from the centre region of the plenum 11. For example, in Figure 1 the plenum is viewed in plan, with the path of inhaled flow aligned with the plane of the drawing. In this view the plenum 11 has a rounded shape, for example it is circular. The sampling inlet may be arranged in or near the middle of this rounded shaped plenum.

The flow inlet 2 and the flow outlet 4 may each comprise a conduit, such as a channel cut into a block of material and enclosed or such as a pipe or tube. The flow inlet and the flow outlet illustrated in Figure 1 are aligned in different directions. The flow inlet 2 and flow outlet 4 are both coupled to the plenum 11, which therefore sits at a bend in the path of fluid through the detector inlet 1. At the plenum 11, the flow of gaseous fluid undergoes a change in direction as it flows from the flow inlet 2 through the plenum 11 to the flow outlet 4.

The plenum 11 comprises an internal volume bounded by the inner surface 12 of the wall 8. As illustrated, the surface 12 of the wall 8 may be curved, for example the curvature of the inner surface 12 of the wall 8 may be arranged to provide a bend in the path of the inhaled flow from the flow inlet 2 to the flow outlet 4. As illustrated in Figure 2, the flow cross section of the plenum is greater than the flow cross section of the flow inlet 2. In this context the flow cross section refers to the area transverse to the direction of flow of the gaseous fluid. For example, the plenum 11 may provide a broadening of the flow path where the flow inlet 2 meets the plenum 11. This may act to slow the flow of gaseous fluid as it enters the plenum 11. In the illustration of Figure 2, the flow outlet 4 is shown in plan as having a greater flow cross section than the flow inlet 4. This is one way to provide a slower flow speed in the gaseous fluid flowing out from the plenum at the flow outlet 4. Providing slower flow speed at the outlet may promote the creation of a circulatory flow around the plenum.

As explained above, the flow inlet 2 is arranged to direct the gaseous fluid into the plenum 11. The plenum 11 comprises a first flow path around the outside of the bend provided by the plenum 11 past one side of the sampling inlet, and a second flow path back around the inside of the bend, past the other side of the sampling inlet. Thus, by positioning the sampling inlet in or near the middle of the plenum 11, a circulatory flow of fluid can be induced that encircles the sampling inlet 14. This circulatory flow may vary a spatial distribution of the particulates carried by the fluid to increase a relative proportion of the particulates carried past the sampling inlet 14 without entering a sampling volume 10 from which the sampling inlet 14 obtains samples. The flow outlet 4 may be arranged so that the flow of gaseous fluid leaves the plenum 11 at a lower speed than it enters through the flow inlet 2. For example the flow outlet 4 may present a broader flow cross section to enable the same volume flow rate of gaseous fluid to flow through the outlet 4 as through the inlet 2, but at a lower linear speed. This may increase the tendency of the gaseous fluid to flow back past the sampling inlet on the inside of the bend. For example, in such embodiments fluid may flow into the plenum 11, the flow then curves around one side of the sampling inlet, is inhibited from completely entering the flow outlet 4 by the slow flowing fluid at the flow outlet 4, and at least partially recirculates in the plenum by flowing back past the sampling inlet on the other side of the sampling inlet 14.

In operation of the apparatus of Figure 1a, a flow of gaseous fluid is inhaled and passed from the flow inlet 2, through the plenum 11 to the flow outlet 4. The plenum 11 provides a change in direction of this flow of inhaled gaseous fluid, for example a bend in the direction of flow from the flow inlet 2. The outside of this bend is provided by the wall 8 of the plenum which is curved inward. This changes the direction of flow of inhaled fluid, and bends the flow of fluid around the sampling inlet as it flows through the plenum 11. As it reaches the flow outlet 4, some of the gaseous fluid leaves the plenum 11 through the outlet 4, some however flows past the flow outlet 4 and remains in the plenum 11, so is guided back past the other side of the sampling inlet, on the inside of the bend 13, rather in the manner of an eddy current in a stream. When it has flowed back past the sampling inlet again to return to the flow inlet 2, this back flow may then re-join further flow arriving in the plenum 11 at the flow inlet 2. This same cycle thus begins again, and some of this re-joined flow is recirculated, whilst some leaves through the outlet 4. Accordingly, for at least part of the flow of gaseous fluid, such embodiments may increase the dwell time of the gaseous fluid around the sampling inlet as compared to the same flow along a straight pipe of constant cross section.

At least a portion of the fluid may thus flow in around the plenum, in a curved, for example at least partially circular flow path surrounding the sampling inlet, before exiting the plenum via the flow outlet 4. It can be seen in Figure 2 that this circulatory flow circulates about a rotation axis that is transverse to, for example perpendicular to, the bulk flow direction of the gaseous fluid through the inlet 2 and outlet 4.

This circulatory flow may provide centrifuging effect around the sampling inlet which tends to cause the particulates carried by the flow to move towards the walls of the plenum, e.g. away from the sampling inlet. This provides a region towards the axis of rotation of the circulatory flow in which the proportion of particulates in the gaseous fluid is depleted with respect to other regions of the gaseous fluid flow e.g. region of the fluid flow that are closer to the walls of the plenum 11. Vapour carried by the flow however remains free to diffuse around the plenum 11, and into this depleted region. Methods of the disclosure therefore comprise collecting samples of the gaseous fluid from this depleted region to reduce the number of particulates that may clog the sampling inlet or enter through the inlet and thus contaminate the detector.

A distribution of the particulates along line A and the sampling volume 10 is illustrated in the plot in Figure 1b. As shown in Figure 1b the number of particulates (e.g. the number per unit volume) decreases as a function of distance from the surface 12 of the wall. For example the number of particulates is lower towards the sampling volume 10 and away from the inside of the bend 13. As described above, the centrifuge effect causes the particulates to move towards the walls of the plenum and this movement leads to the change in the number of particulates with distance from the wall towards the sampling volume. The distribution of particulates illustrated in Figure 1b shows a smaller number of particulates in the region between the inside of the bend 13 and the sampling volume 10 relative to the region between the surface 12 of the wall and the sampling volume 10. Without wishing to be bound by any particular theory, it is believed that a portion of the fluid in the region between the surface 12 of the wall and the sampling volume 10 passes into the region between the inside of the bend 13 and the sampling volume 10, therefore the fluid between the inside of the bend 13 and the sampling volume 10 may have undergone a greater centrifuge effect and therefore may comprise fewer particulates. It will be appreciated however that such a distribution is merely an example.

The curvature of the wall may be selected to reduce the impaction of the particulates on internal surfaces of the detector inlet 1. For example, the radius of curvature of the wall may differ in different parts of the wall to provide a smooth path for the flow of fluid. For example, a first part of the wall adjacent the flow inlet 2 and a second part of the wall adjacent the fluid outlet 4 both have a larger radius of curvature than the portion of the wall coupling the first portion to the second portion. The change in the radius of curvature leads to a gradual change in the direction of flow of the inhaled gaseous fluid. This may reduce the tendency of particulates and aerosols carried by the gaseous fluid to impact on and accumulate on the wall of the plenum.

Figure 1c shows an example of a detector inlet such as that described above with reference to Figure 1a. In Figure 1c however, the flow inlet 2 is aligned in the same direction as the fluid outlet 4. The fluid outlet 4 however is offset from the flow inlet 2. For in the example illustrated in Figure 1c, the fluid outlet 4 is spaced laterally from the flow inlet, e.g. it is spaced in a direction transverse to the direction of the fluid flow. In this example, at least a portion of the fluid may flow in circles around the plenum, surrounding the sampling inlet, before exiting the plenum via the flow outlet 4 in a direction parallel to the flow inlet 2. In the example illustrated in Figure 1c the flow outlet 4 is located on an opposing side of the plenum 8 to the flow inlet 2.The gaseous fluid may therefore flow out of the plenum via the flow outlet 4 in the same direction as it flows into the plenum from the flow inlet 2. In other embodiments however, the flow outlet 2 may also be located on the same side of the plenum 8 as the flow inlet 2. For example, the plenum may be located at the turn in a U-bend. These and other examples provide a circulatory flow which rotates about an axis which is transverse to the direction of flow of the gaseous fluid.

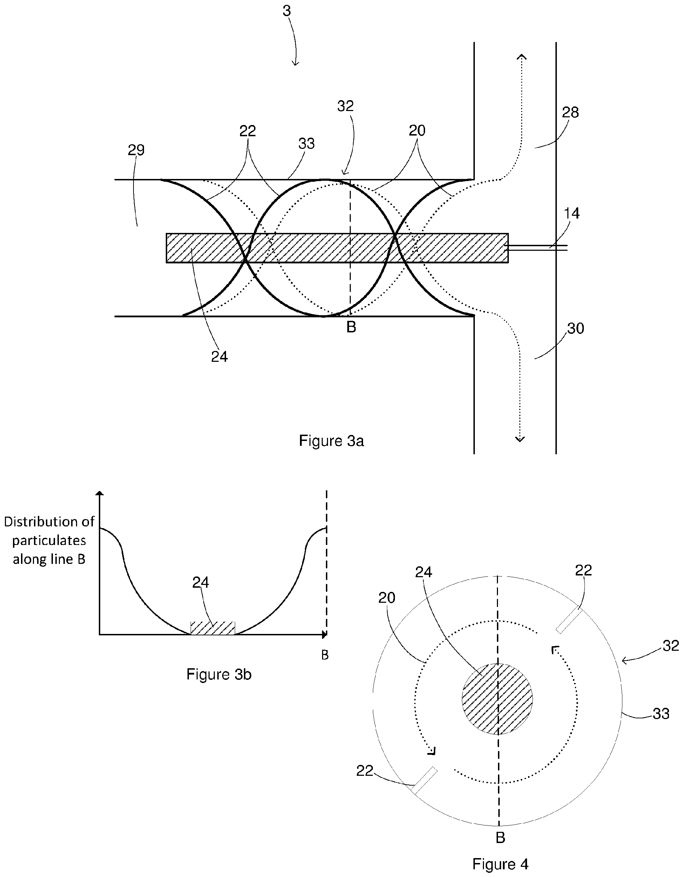

Other configurations of detector inlets may also be provided. The circulatory flow of fluid in the plenum may also circulate about an axis aligned to the flow direction. For example the, plenum may comprise a conduit or flow passage 32, such as a cylinder, arranged so that fluid can along it. In such configurations, the axis of rotation of the circulatory flow may be aligned with a longitudinal axis of the flow passage. One such example is illustrated in Figure 3a.

In the example illustrated in Figure 3a, the detector inlet comprises a flow passage 32 arranged to provide a circulatory flow which rotates about an axis that is parallel with the direction of flow of the gaseous fluid. As explained above, this circulatory flow can provide a variation in the spatial distribution of particulates in the flow so that relatively more of them are carried by the flow nearer the wall of the flow passage. The number of particulates also decreases as a function of spacing from a wall of the flow passage.

In more detail, Figure 3a shows a detector inlet having a flow passage 32, a flow inlet 29, a first flow outlet 28 and a second flow outlet 30. The flow passage 32 comprises a wall 33, a flow director in the form of fins 22 arranged on the inner surface of the wall 33 of the flow passage 32, a sampling volume 24 and a sampling inlet 14. Figure 4 shows a cross section of the flow passage 32 of Figure 3a, taken at the line marked B in Figure 3a.

In the example illustrated in Figure 3a and Figure 4, the flow passage 32 comprises a conduit such as a channel cut into a block of material and enclosed or such as a pipe or tube. The flow passage 32 defines the bulk flow direction. The flow inlet 29 may comprise a part of this flow passage 32. The first flow outlet 28 and second flow outlet 30 are separated along the flow passage 32 from the flow inlet 29 and extend from the trunk in a direction away from the axis of the trunk. For example, the flow outlets 28, 30 may branch out from the flow passage 32. For example they may be arranged at an angle to the flow passage 32. They are illustrated as being arranged transverse to (e.g. perpendicular to) the flow passage 32, but in some embodiments they may be at least partially aligned with the direction of the flow passage 32. For example the flow passage and the flow outlets 28, 30 may be arranged in a Y-shape. In the example illustrated in Figure 3a, the first flow outlet 28 and the second flow outlet 30 extend from the trunk in different directions, for example the first flow outlet 28 may be arranged to carry a flow of gaseous fluid in an opposite direction to the flow of fluid carried by the second flow outlet 30.

In Figure 3a, the flow director comprises a fin, or fins 22, that extend from the interior wall 33 of the flow passage 32. The fin or fins 22 may be aligned with a helical path (in the manner of a screw thread around and along the flow passage 32. To act as a flow director, this fin (or fins) are in the path of at least a portion of the fluid flowing through the flow passage. In the example illustrated, the flow director is in the form of two fins 22 that are coupled to the wall of the flow passage 32. A single fin, or a greater number of fins, may also be used. The fins 22 need not be continuous, provided that they comprise thin, elongate, structures which are aligned with at least part of a helical (e.g. corkscrew) path along the flow passage. The fin (or fins) may be carried by the interior wall of the flow passage along a helical path with the axis of the helix being aligned with the flow passage 32, for example the helical path may be coaxial with the flow passage 32. The fins 22 may be fixed to the wall 33 of the flow passage 32, for example the flow passage 32 may be integrally formed with the fins 22. The fins may extend at least 10 micron from the wall 33 of the flow passage 32.

The flow passage 32 is arranged to receive a sample from the flow inlet 29. The fins 22 on the inner surface of the wall 33 of the flow passage 32 are arranged to alter the flow direction of the fluid so that the fluid flows with a circulatory flow 20 having an axis of rotation that is aligned with the bulk flow direction in the flow passage 32. The sampling inlet 14 is arranged to obtain samples from the sampling volume 24, for example as illustrated in Figure 3a the sampling inlet may be located in the centre of the sampling volume. Figure 4 shows a cross sectional view of the flow passage 32 of Figure 3a. Figure 4 shows the sample volume being coaxial to the flow passage 32 and encircled by the flow of fluid 20. The flow path 20 is illustrated in Figure 3a and Figure 4 with the circulatory flow of the fluid following the inner surface of the wall 33 and directed in an anti-clockwise direction by the fins 22.

In operation the gaseous fluid is inhaled through the flow inlet 29 through the flow passage 32 and out of the first fluid outlet 28 and the second fluid outlet 30. The flow director that extends from the interior wall 33 of the flow passage 32 changes the direction of the flow of gaseous fluid through the flow passage. As the fluid moves along the flow passage the change in direction provides a rotation to the fluid so that the flow of fluid encircles the axis of the flow passage, for example in the manner that rifling of a gun barrel induces a circulatory motion to a bullet travelling along the barrel. The gaseous fluid continues to rotate about the axis of the flow passage whilst travelling towards the first fluid outlet 28 and the second fluid outlet 30. The gaseous fluid then exits the flow passage via the first fluid outlet 28 and the second fluid outlet 30.

The circulatory fluid flow path 20 illustrated in Figure 3a and Figure 4 is a helical flow path having an axis corresponding to the flow direction along the flow passage. The flow path may be provided by the arrangement of fins 22. In the arrangement illustrated in Figure 3a and Figure 4 the fins 22 are arranged on the surface of the flow passage with the fins oriented to form a helical pattern having an axis that is coaxial with the axis of the flow passage. The fluid is therefore directed in a helical path, following the orientation of the fins 22, along the flow passage 32. In the example illustrated in Figure 3a and Figure 4 the fins are arranged in an anti-clockwise helix with respect to the fluid flow and therefore as the fluid flows along the flow passage the fluid fins rotate the fluid in an anti-clockwise direction.

The circulatory flow of the fluid in the flow passage may vary a spatial distribution of the particulates carried by the fluid. As described above the circulatory flow may increase the relative proportion of particulates carried past the sampling inlet 14 without entering the sampling volume 24 with the centrifuging effect of the circulatory flow causing the particulates to move towards the walls of the flow passage 33. The movement of the particulates towards the walls leads to a lower proportion of particulates, and therefore a greater proportion of vapour, in the sampling volume.

In the example illustrated in Figure 3a the nature of the circulatory flow of the fluid is determined by the arrangement of the fins 22. For example, the number of times the fluid encircles the axis of the flow passage 32 for a given length of the flow passage 32 is determined by the position of the fins 22 on the wall 33 of the flow passage 32. An arrangement of the fins having a larger number of rotations along the length of the flow passage 32, for example the fins being arranged in a helix with a smaller pitch, may lead to a larger number of cycles of the fluid about axis of the flow passage as the gaseous fluid travels along the length of the flow passage.

The distribution of the particulates along line B and the sampling volume 24 is illustrated in the plot in Figure 3b. As shown in Figure 3b the number of particulates decreases from the wall 33 of the flow passage to the sampling inlet. As described above, the centrifuge effect causes the particulates to move towards the walls 33 and this reduces the number of particulates in the sampling volume 24 that is positioned towards the axis of the flow passage 32.

The sampling inlet 14 may be coupled to the detector inlet 1 and adapted for collecting samples of the fluid from a sampling volume 10, 24 around the sampling inlet 14. According to the present invention, the sampling inlet used to take samples from a flow of gaseous fluid comprises a pinhole inlet. The sampler (not shown) is configured to draw a selected volume of fluid, smaller than the sampling volume 10, 24, through the sampling inlet 14 to provide a sample to the analytical apparatus. The sampler may comprise an electromechanical actuator, for example a solenoid driven actuator, and/or a mechanical pump arranged to transfer vapour from the sampling volume 10, 24 through the sampling inlet 14 and into the analytical apparatus.

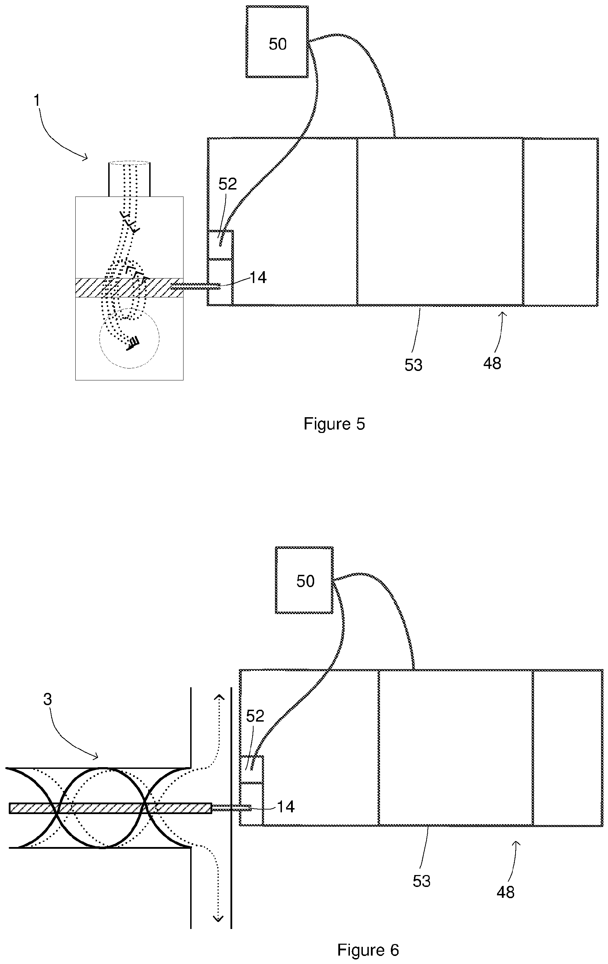

Figure 5 shows a detector 48 coupled to the detector inlet 1 via the sampling inlet 14 and Figure 6 shows a detector 48 coupled to the detector inlet 3 via the sampling inlet 14. The detector 48 comprises a sampler 52 arranged to obtain samples of the fluid via the sampling inlet and an analytical apparatus 53.

The analytical apparatus 53 is configured to analyse the sample received from the sampling inlet, for example to determine one or more chemicals of interest in the sample. The analytical apparatus 53 shown in Figure 5 and Figure 6 comprises a mass spectrometer. A mass spectrometer may comprise an ioniser, an ion accelerator, a beam focusser, a magnet, and a faraday collector arranged to perform mass spectrometry analysis on samples of vapour.

As illustrated, a controller 50 is coupled to control the analytical apparatus, the flow provider and the sampler 52. The controller 50 may comprise a processor and a memory storing instructions for operation of the detector 48.

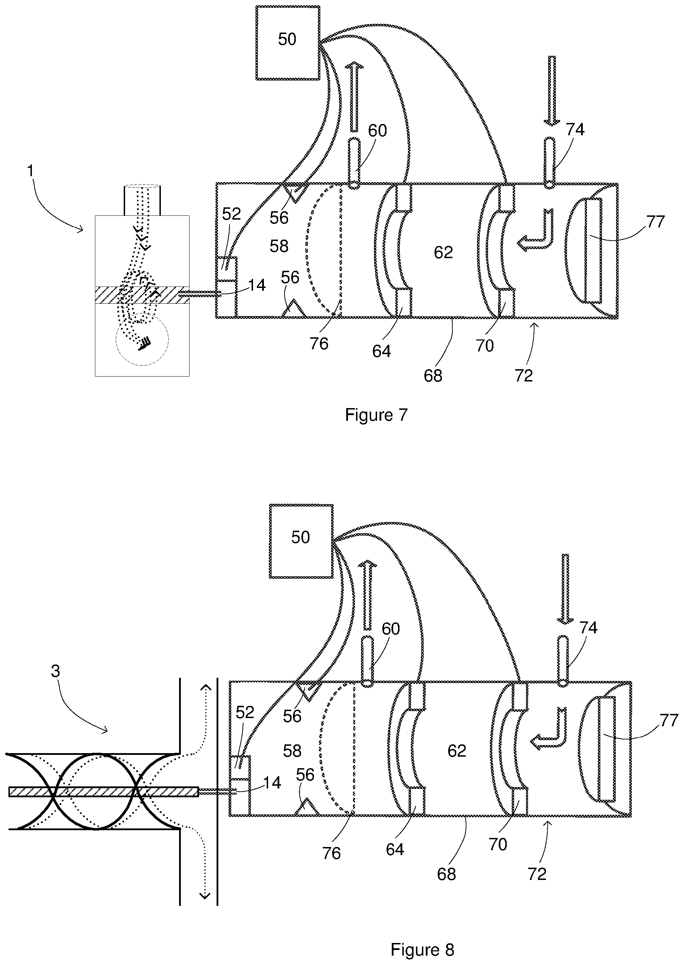

Figure 7 and Figure 8 shows a detector 68 in which the analytical apparatus comprises an ion mobility spectrometer 72 but which is otherwise identical to the apparatus shown in Figure 5 and Figure 6. The ion mobility spectrometer of Figure 7 is coupled to a detector inlet 1 by a sampling inlet 14. The sampler 52 is arranged to obtain samples of the fluid through the sampling inlet 14 and to provide them to the ion mobility spectrometer 72. As in the example of Figure 5 and Figure 6, the controller 50 may comprise a processor and a memory storing instructions for operation of the detector 68. Also as in Figure 5 and Figure 6, the sampler 52 may comprise an electromechanical actuator, for example a solenoid driven actuator, and/or a mechanical pump arranged to transfer vapour from the sampling volume 10, 24 (as illustrated in Figure 1a, Figure 1b, Figure 1c, Figure 2, Figure 3a, Figure 3b and Figure 4) through the sampling inlet 14 into the analytical apparatus.

A gate electrode 76 may separate the reaction region 58 from a drift chamber 62. The gate electrode 76 may comprise an assembly of at least two electrodes, which may be arranged to provide a Bradbury-Nielsen gate. The drift chamber 62 can comprise a collector 77 toward the opposite end of the drift chamber 62 from the gate electrode 76 for detecting ions. The drift chamber also comprises a drift gas inlet 74, and a drift gas outlet 60 arranged to provide a flow of drift gas along the drift chamber 62 from the ion collector 77 towards the gate 76. The sampler 52 can be operated by the controller 50 to obtain fluid from sampling volume 10, 24 (as illustrated in Figure 1a, Figure 1b, Figure 1c, Figure 2, Figure 3a, Figure 3b and Figure 4) through the sampling inlet 14. The sampler 52 can also be operated to provide an obtained sample into the reaction region 58 of the spectrometer 68. The reaction region shown in Figure 7 and Figure 8 comprises an ioniser 56 for ionising a sample. The ioniser 56 may comprise a corona discharge ioniser. The drift chamber 62 may comprise drift electrodes 64, 70 for applying an electric field along the drift chamber 62 to move ions towards the collector 77 against the flow of the drift gas. Although the apparatus of Figure 7 and Figure 8 is illustrated as comprising two drift electrodes 64, 70, some embodiments may comprise more than two drift electrodes.

As explained above, detector inlets of the present disclosure find particular application in portable devices which may be used in hostile environments where dust and contaminants are prevalent. These detector inlets may be used with a variety of analytical apparatus, such as the mass spectrometer of Figure 5 and Figure 6 and the ion mobility spectrometer of Figure 7 and Figure 8, other kinds of analysers, spectrometers and/or chromatography apparatus. In addition, the detector inlet 1, 3 may have different configurations.

In some examples described above, the flow director comprises a single flow inlet and a single flow outlet. In other examples the flow director may comprise more than one flow inlet and more than one flow outlet. In an example the flow director comprises more flow outlets than flow inlets. The flow cross section of these inlets and outlets may be selected so that the total flow cross section of the flow outlets is greater than the total flow cross section area of the flow inlet (or inlets).

In the examples illustrated above, the surface of the flow director 1 directs the flow of fluid to induce circulatory flow in the fluid. The flow director 1 may also comprise an additional fluid path configured to direct additional gaseous fluid into the flow to create the circulatory flow. The additional fluid path may comprise one or more jets of fluid that are arranged to introduce fluid into the flow director altering the flow path of the fluid to create circulatory flow of the gaseous fluid.

In the example illustrated in Figure 3a and Figure 4 the fins are arranged on the wall of the flow passage in a helical arrangement so that the flow of the fluid is in a helical path along the flow passage. The fins may be arranged on the surface in a pattern other than a helical pattern to induce circulatory motion of the fluid along the flow passage in a path that is not helical, for example it fins may be at least partially tapered, for example into a cone shaped spiral. The fins are arranged to direct the fluid in an anti-clockwise helical path, the fins may also be arranged in a clockwise helical pattern so that the fluid flows in a clockwise helical path.

In the example illustrated in Figure 3a and Figure 4 the fins are arranged on the wall of the flow passage 32. The helical pattern may have a uniform pitch along the length of the helix. The helix may extend along at least a part of the flow passage, for example all of the flow passage. The pitch of the helical fins may also vary along the length of the flow passage, for example the pitch of the fins may be reduced in a portion of the flow passage so circulatory flow is such that the fluid undergoes more rotations about the axis of the flow passage for a given length of the flow passage.

In the example illustrated in Figure 3a and Figure 4 the flow director comprises fins that extend from the wall 33 of the flow passage 32. The flow director may also comprise a groove in the wall 33 of the flow passage 32 to direct the fluid in a circulatory path, for example the groove may be an indented region on the wall 33 of the flow passage 32, for example in the manner of a screw thread in a nut.

In the example illustrated in Figure 3a and Figure 4 the fins extend from the wall 33 of the flow passage 32. The fins may also extend from another part of the flow passage, for example the fins may extend from the flow inlet and/or flow outlet into the flow passage.

In the example illustrated in Figure 3a and Figure 4 the first fluid outlet 28 and the second fluid outlet 30 are positioned transverse to the flow passage 32. The fluid outlet 28 and/or the second fluid outlet 30 may also be at least partially aligned with the flow direction, for example the fluid outlet 28 and/or the second fluid outlet 30 may be oriented at 45 degrees with respect to the flow passage.

In the example illustrated in Figure 3a and Figure 4, the flow passage may be less than 20mm wide. For example it may be less than 10mm wide, for example less than 5mm, for example less than 2mm, for example less than 1.5mm, for example less than 1mm, for example less than 0.75mm, for example less than 0.5mm, for example less than 0.4mm, for example less than 0.3mm, for example less than 0.2mm, for example less than 0.1mm.

In the example illustrated in Figure 3a and Figure 4, the flow passage may be at least 10 microns wide, for example at least 0.1mm wide. For example it may be at least 0.2mm, for example at least 0.3mm, for example at least 0.4mm, for example at least 0.5mm, for example at least 0.75mm, for example at least 1mm, for example at least 1.5mm, for example at least 2mm, for example at least 5mm wide.

The detector inlet may further comprise a mover that moves the gaseous fluid around the circulatory flow. The mover may be arranged to blow an additional flow of gaseous fluid, such as a jet, around the internal surface of a wall of the flow passage or plenum.

The detector inlet may further comprise a heater to heat the gaseous fluid in the plenum. The heater may be configured to heat the flow of fluid, for example to heat the gaseous fluid to vapourise aerosol carried by the flow. In an example the heater is positioned in the flow inlet, flow passage and/or the plenum. The heater may comprise a resistive heater such as a filament heater, for example a membrane heater. Examples of heaters also include infrared light sources.

In the examples illustrated in Figure 1a and Figure 3, the flow inlet has a smaller flow cross section area than the flow outlet. The flow inlet may also have the same flow cross section as the flow outlet. In some examples it may have a larger flow cross section than the flow outlet.

In the example illustrated in Figure 1a and Figure 3 the circulatory flow circulates about a rotation axis that is transverse to the bulk flow direction. The circulatory flow may also circulate about a rotation axis that is in a direction other than transverse to the bulk flow direction, for example aligned to the bulk flow direction.

The detector inlets described herein are illustrated as being arrangements of conduits, such as hoses or pipes. As noted above however they may also be provided by channels, and plenums, which are cut into a block of material, and then enclosed. In such embodiments the flow passages and inlets described herein may not have a circular cross section.

It should also be appreciated that particular combinations of the various features described and defined in any aspects of the invention can be implemented and/or supplied and/or used independently. Other examples and variations will be apparent to the skilled addressee in the context of the present disclosure.

## Claims

1. A detector inlet (1) for providing a sample to an analytical apparatus (53) for detecting a substance of interest, the detector inlet (1) comprising:
a plenum (11) for allowing passage of a flow of a gaseous fluid, the plenum (11) comprising a sampling volume (10);
a sampling inlet (14) arranged in the plenum (11) wherein the sampling inlet (14) comprises a pinhole inlet arranged to collect samples of the gaseous fluid from the sampling volume (10) and to provide the samples to the analytical apparatus (53), wherein the flow carries particulates; and
a flow director arranged to create circulatory flow of the gaseous fluid around the plenum (11), said circulatory flow encircling the sampling inlet (14) thereby to vary a spatial distribution of the particulates carried by the fluid to increase a relative proportion of the particulates carried past the sampling inlet (14) without entering the sampling volume (10).

2. The detector inlet (1) of claim 1, wherein the plenum (11) is arranged to direct the flow of fluid in a flow direction and so that the circulatory flow circulates about an axis of rotation that is transverse to the bulk flow direction, for example wherein the flow director comprises a flow inlet (2) to the plenum (11) and a flow outlet (4) from the plenum (11) wherein the flow outlet (4) is aligned to carry flow in a direction that is transverse to a direction of flow into the plenum (11) from the inlet, for example wherein the flow inlet (2) has a smaller cross section than the flow outlet (4).

3. The detector inlet (1) of any preceding claim, wherein the flow director comprises a curved wall of the plenum (11) arranged so that the circulatory flow follows an internal surface of the curved wall of the plenum (11), for example wherein varying the spatial distribution of particulates carried by the flow comprises decreasing the relative proportion of the particulates carried by the flow with distance from the curved wall of the plenum (11).

4. The detector inlet (1) of any preceding claim, wherein the plenum (11) is arranged to direct the flow of gaseous fluid in a bulk flow direction and is configured so that the circulatory flow circulates about an axis of rotation that is aligned with the bulk flow direction, for example wherein the plenum (11) comprises a cylinder and the axis of rotation is aligned with a longitudinal axis of the cylinder, for example wherein the flow director comprises a flow inlet (2) to the plenum (11) and a flow outlet (4) from the plenum (11), and the flow inlet (2) and the flow outlet (4) are spaced apart in the bulk flow direction.

5. The detector inlet (1) of any preceding claim, wherein the flow director comprises a structure aligned with a helical path in the plenum (11), for example wherein the structure comprises a fin or, a groove in the wall of the plenum (11).

6. The detector inlet (1) of any of claims 1 to 5 wherein the flow director comprises a mover arranged to move gaseous fluid around the circulatory flow, for example wherein the mover is arranged to blow a jet of gaseous fluid around an internal surface of a wall of the plenum (11).

7. The detector inlet (1) of any preceding claim, further comprising at least one of:
a heater to heat the gaseous fluid in the flow passage (32); and
an additional fluid path configured to direct additional gaseous fluid into the flow to create the circulatory flow.

8. A detector comprising an analytical apparatus (53) for detecting a substance of interest and a detector inlet (1) according to any preceding claim arranged to provide samples of the gaseous fluid to the analytical apparatus (53).

9. A detector inlet (1) for providing a sample to an analytical apparatus (53) for detecting a substance of interest, the detector inlet (1) comprising:
a flow passage (32) for carrying an inhaled flow of gaseous fluid in a bulk flow direction, the flow passage (32) comprising a sampling volume (24);
a sampling inlet (14) comprising a pinhole inlet adapted to collect samples of the fluid from the sampling volume (24) and to provide the samples to the analytical apparatus (53); and
a flow director arranged to create a circulatory flow of the gaseous fluid around the flow passage (32), wherein the circulatory flow has an axis of rotation that is aligned with the bulk flow direction, said circulatory flow encircling the sampling inlet (14) thereby to vary a spatial distribution of particulates carried by the fluid to increase a relative proportion of the particulates carried past the sampling inlet (14) without entering the sampling volume (24).

10. The detector inlet (1) of claim 9, wherein the flow director comprises a surface configured to alter a direction of the flow of gaseous fluid to create the circulatory flow, for example wherein the surface comprises a groove or fin, for example wherein the flow director comprises an additional fluid path configured to deliver an additional flow of gaseous fluid into the inhaled flow to cause the circulatory flow, for example wherein the flow director comprises a flow inlet (2) to the flow passage (32) and a flow outlet (4) from the flow passage (32), and the flow inlet (2) and the flow outlet (4) are spaced apart along the direction of the axis of rotation, for example wherein the flow outlet (4) comprises a first flow outlet (4) and a second flow outlet (4), and the sampling inlet (14) is arranged between the first flow outlet (4) and the second flow outlet (4), for example wherein the first flow outlet (4) and the second flow outlet (4) are at least partially aligned with the flow direction.

11. A method of detecting a substance of interest, the method comprising:
providing a flow of gaseous fluid along a flow passage (32) in a flow direction, the flow passage (32) including a sampling volume (24);
obtaining samples of the gaseous fluid through a sampling inlet (14) comprising a pinhole inlet from the sampling volume (24) and providing the samples to a detector for detecting the substance of interest; and
inducing a circulatory flow of the gaseous fluid around the flow passage (32), said circulatory flow encircling the sampling inlet (14) thereby to vary a spatial distribution of particulates carried by the fluid to increase a relative proportion of the particulates carried past the sampling inlet (14) without entering the sampling volume (24).

12. The method of claim 11, wherein the flow passage (32) comprises a plenum (11) having a curved wall and the circulatory flow of the gaseous fluid follows an internal surface of the curved wall, for example wherein the circulatory flow varies the spatial distribution of particulates carried by the flow so that the relative proportion of the particulates carried by the flow around the plenum (11) decreases with distance from the curved wall of the plenum (11), for example wherein the curved wall directs the flow of gaseous fluid in a bulk flow direction and the circulatory flow circulates about an axis of rotation that is aligned with the bulk flow direction, for example wherein the plenum (11) comprises a cylinder and the axis of rotation is aligned with a longitudinal axis of the cylinder, for example wherein the flow of gaseous fluid flows from a flow inlet (2) to a flow outlet (4), and the flow inlet (2) and the flow outlet (4) are spaced apart in the direction of the longitudinal axis of the cylinder.

13. The method of claim 11, wherein the flow of fluid flows in a flow direction and the circulatory flow circulates about an axis of rotation that is transverse to the flow direction, for example wherein the flow of fluid flows from a flow inlet (2) to a flow outlet (4) and the flow outlet (4) carries the flow in a direction that is transverse to a direction of flow from the flow inlet (2), for example wherein the flow of fluid in the flow inlet (2) is faster than the flow of fluid in the flow outlet (4).

14. The method of any of claims 11 to 13, further comprising heating the sample in the flow passage (32).

15. The method of any of claims 11 to 14, further comprising providing an additional flow of gaseous fluid into the flow passage (32) path to create the circulatory flow.

## Patentansprüche

1. Ein Detektoreinlass (1) zum Bereitstellen einer Probe für ein analytisches Gerät (53) zum Detektieren einer Substanz von Interesse, wobei der Detektoreinlass (1) Folgendes umfasst:
ein Plenum (11), um den Durchgang eines Flusses eines gasförmigen Fluids zu erlauben, wobei das Plenum (11) ein Probenahmevolumen (10) umfasst;
einen Probenahmeeinlass (14), der in dem Plenum (11) eingerichtet ist, wobei der Probenahmeeinlass (14) einen Lochblendeneinlass umfasst, der eingerichtet ist, um Proben des gasförmigen Fluids von dem Probenahmevolumen (10) zu sammeln und um die Proben dem analytischen Gerät (53) bereitzustellen, wobei der Fluss Schwebstoffe trägt; und
ein Flussrichtgerät, das eingerichtet ist, um einen zirkulatorischen Fluss des gasförmigen Fluids um das Plenum (11) herum zu erzeugen, wobei der genannte zirkulatorische Fluss den Probenahmeeinlass (14) umkreist, um dadurch eine räumliche Verteilung der Schwebstoffe, die durch das Fluid getragen werden, zu variieren, um einen relativen Anteil der Schwebstoffe, die an dem Probenahmeeinlass (14) vorbei getragen werden, ohne in das Probenahmevolumen (10) einzutreten, zu vergrößern.

2. Der Detektoreinlass (1) nach Anspruch 1, wobei das Plenum (11) eingerichtet ist, um den Fluss eines Fluids in einer Flussrichtung zu richten und sodass der zirkulatorische Fluss um eine Drehachse zirkuliert, die quer zu der Hauptmassenflussrichtung verläuft, wobei zum Beispiel das Flussrichtgerät einen Flusseinlass (2) zu dem Plenum (11) und einen Flussauslass (4) aus dem Plenum (11) umfasst, wobei der Flussauslass (4) ausgerichtet ist, um Fluss in einer Richtung zu tragen, die quer zu einer Richtung von Fluss in das Plenum (11) von dem Einlass verläuft, wobei zum Beispiel der Flusseinlass (2) einen kleineren Querschnitt als der Flussauslass (4) aufweist.

3. Der Detektoreinlass (1) nach einem vorhergehenden Anspruch, wobei das Flussrichtgerät eine gekrümmte Wand des Plenums (11) umfasst, die so eingerichtet ist, dass der zirkulatorische Fluss einer internen Oberfläche der gekrümmten Wand des Plenums (11) folgt, wobei zum Beispiel das Variieren der räumlichen Verteilung von Schwebstoffen, die durch den Fluss getragen werden, das Verringern des relativen Anteils der Schwebstoffe, die durch den Fluss getragen werden, mit Abstand von der gekrümmten Wand des Plenums (11) umfasst.

4. Der Detektoreinlass (1) nach einem vorhergehenden Anspruch, wobei das Plenum (11) eingerichtet ist, um den Fluss eines gasförmigen Fluids in einer Hauptmassenflussrichtung zu richten, und so konfiguriert ist, dass der zirkulatorische Fluss um eine Drehachse zirkuliert, die mit der Hauptmassenflussrichtung ausgerichtet ist, wobei zum Beispiel das Plenum (11) einen Zylinder umfasst und die Drehachse mit einer Längsachse des Zylinders ausgerichtet ist, wobei zum Beispiel das Flussrichtgerät einen Flusseinlass (2) zu dem Plenum (11) und einen Flussauslass (4) aus dem Plenum (11) umfasst, und der Flusseinlass (2) und der Flussauslass (4) in der Hauptmassenflussrichtung beabstandet sind.

5. Der Detektoreinlass (1) nach einem vorhergehenden Anspruch, wobei das Flussrichtgerät eine Struktur umfasst, die mit einem spiralförmigen Weg in dem Plenum (11) ausgerichtet ist, wobei zum Beispiel die Struktur eine Rippe oder eine Rille in der Wand des Plenums (11) umfasst.

6. Der Detektoreinlass (1) nach einem der Ansprüche 1 bis 5, wobei das Flussrichtgerät eine Bewegungsvorrichtung umfasst, die eingerichtet ist, um ein gasförmiges Fluid um den zirkulatorischen Fluss herum zu bewegen, wobei zum Beispiel die Bewegungsvorrichtung eingerichtet ist, um einen Strahl eines gasförmigen Fluids um eine interne Oberfläche einer Wand des Plenums (11) herum zu blasen.

7. Der Detektoreinlass (1) nach einem vorhergehenden Anspruch, der ferner mindestens eines von Folgendem umfasst:
eine Heizung, um das gasförmige Fluid in dem Flussdurchgang (32) zu erhitzen; und
einen zusätzlichen Fluidweg, der dafür konfiguriert ist, ein zusätzliches gasförmiges Fluid in den Fluss zu richten, um den zirkulatorischen Fluss zu erzeugen.

8. Ein Detektor, der ein analytisches Gerät (53) zum Detektieren einer Substanz von Interesse und einen Detektoreinlass (1) gemäß einem vorhergehenden Anspruch, der eingerichtet ist, um Proben des gasförmigen Fluids dem analytischen Gerät (53) bereitzustellen, umfasst.

9. Ein Detektoreinlass (1) zum Bereitstellen einer Probe für ein analytisches Gerät (53) zum Detektieren einer Substanz von Interesse, wobei der Detektoreinlass (1) Folgendes umfasst:
einen Flussdurchgang (32) zum Tragen eines inhalierten Flusses eines gasförmigen Fluids in einer Hauptmassenflussrichtung, wobei der Flussdurchgang (32) ein Probenahmevolumen (24) umfasst;
einen Probenahmeeinlass (14), der einen Lochblendeneinlass umfasst, der angepasst ist, um Proben des Fluids von dem Probenahmevolumen (24) zu sammeln und um die Proben dem analytischen Gerät (53) bereitzustellen; und ein Flussrichtgerät, das eingerichtet ist, um einen zirkulatorischen Fluss des gasförmigen Fluids um den Flussdurchgang (32) herum zu erzeugen, wobei der zirkulatorische Fluss eine Drehachse aufweist, die mit der Hauptmassenflussrichtung ausgerichtet ist, wobei der genannte zirkulatorische Fluss den Probenahmeeinlass (14) umkreist, um dadurch eine räumliche Verteilung von Schwebstoffen, die durch das Fluid getragen werden, zu variieren, um einen relativen Anteil der Schwebstoffe, die an dem Probenahmeeinlass (14) vorbei getragen werden, ohne in das Probenahmevolumen (24) einzutreten, zu vergrößern.

10. Der Detektoreinlass (1) nach Anspruch 9, wobei das Flussrichtgerät eine Oberfläche umfasst, die dafür konfiguriert ist, eine Richtung des Flusses eines gasförmigen Fluids zu ändern, um den zirkulatorischen Fluss zu erzeugen, wobei zum Beispiel die Oberfläche eine Rille oder Rippe umfasst, wobei zum Beispiel das Flussrichtgerät einen zusätzlichen Fluidweg umfasst, der dafür konfiguriert ist, einen zusätzlichen Fluss eines gasförmigen Fluids in den inhalierten Fluss zu liefern, um den zirkulatorischen Fluss zu verursachen, wobei zum Beispiel das Flussrichtgerät einen Flusseinlass (2) zu dem Flussdurchgang (32) und einen Flussauslass (4) aus dem Flussdurchgang (32) umfasst und der Flusseinlass (2) und der Flussauslass (4) entlang der Richtung der Drehachse beabstandet sind, wobei zum Beispiel der Flussauslass (4) einen ersten Flussauslass (4) und einen zweiten Flussauslass (4) umfasst und der Probenahmeeinlass (14) zwischen dem ersten Flussauslass (4) und dem zweiten Flussauslass (4) eingerichtet ist, wobei zum Beispiel der erste Flussauslass (4) und der zweite Flussauslass (4) mindestens teilweise mit der Flussrichtung ausgerichtet sind.

11. Ein Verfahren zum Detektieren einer Substanz von Interesse, wobei das Verfahren Folgendes umfasst:
Bereitstellen eines Flusses eines gasförmigen Fluids entlang eines Flussdurchgangs (32) in einer Flussrichtung, wobei der Flussdurchgang (32) ein Probenahmevolumen (24) beinhaltet;
Erhalten von Proben des gasförmigen Fluids durch einen Probenahmeeinlass (14), der einen Lochblendeneinlass umfasst, von dem Probenahmevolumen (24) und Bereitstellen der Proben für einen Detektor zum Detektieren der Substanz von Interesse; und
Induzieren eines zirkulatorischen Flusses des gasförmigen Fluids um den Flussdurchgang (32) herum, wobei der genannte zirkulatorische Fluss den Probenahmeeinlass (14) umkreist, um dadurch eine räumliche Verteilung von Schwebstoffen, die durch das Fluid getragen werden, zu variieren, um einen relativen Anteil der Schwebstoffe, die an dem Probenahmeeinlass (14) vorbei getragen werden, ohne in das Probenahmevolumen (24) einzutreten, zu vergrößern.

12. Das Verfahren nach Anspruch 11, wobei der Flussdurchgang (32) ein Plenum (11) umfasst, das eine gekrümmte Wand aufweist, und der zirkulatorische Fluss des gasförmigen Fluids einer internen Oberfläche der gekrümmten Wand folgt, wobei zum Beispiel der zirkulatorische Fluss die räumliche Verteilung von Schwebestoffen, die durch den Fluss getragen werden, variiert, sodass sich der relative Anteil der Schwebstoffe, die durch den Fluss um das Plenum (11) herum getragen werden, mit Abstand von der gekrümmten Wand des Plenums (11) verringert, wobei zum Beispiel die gekrümmte Wand den Fluss eines gasförmigen Fluids in einer Hauptmassenflussrichtung richtet und der zirkulatorische Fluss um eine Drehachse zirkuliert, die mit der Hauptmassenflussrichtung ausgerichtet ist, wobei zum Beispiel das Plenum (11) einen Zylinder umfasst und die Drehachse mit einer Längsachse des Zylinders ausgerichtet ist, wobei zum Beispiel der Fluss eines gasförmigen Fluids von einem Flusseinlass (2) zu einem Flussauslass (4) fließt und der Flusseinlass (2) und der Flussauslass (4) in der Richtung der Längsachse des Zylinders beabstandet sind.

13. Das Verfahren nach Anspruch 11, wobei der Fluss eines Fluids in einer Flussrichtung fließt und der zirkulatorische Fluss um eine Drehachse zirkuliert, die quer zu der Flussrichtung verläuft, wobei zum Beispiel der Fluss eines Fluids von einem Flusseinlass (2) zu einem Flussauslass (4) fließt und der Flussauslass (4) den Fluss in einer Richtung trägt, die quer zu einer Richtung von Fluss von dem Flusseinlass (2) verläuft, wobei zum Beispiel der Fluss eines Fluids in dem Flusseinlass (2) schneller als der Fluss eines Fluids in dem Flussauslass (4) ist.

14. Das Verfahren nach einem der Ansprüche 11 bis 13, das ferner das Erhitzen der Probe in dem Flussdurchgang (32) umfasst.

15. Das Verfahren nach einem der Ansprüche 11 bis 14, das ferner das Bereitstellen eines zusätzlichen Flusses eines gasförmigen Fluids in den Weg des Flussdurchgangs (32) umfasst, um den zirkulatorischen Fluss zu erzeugen.

## Revendications

1. Orifice d'entrée de détecteur (1) pour fournir un échantillon à un appareil d'analyse (53) pour détecter une substance d'intérêt, l'orifice d'entrée de détecteur (1) comprenant :
un collecteur (11) pour permettre le passage d'un flux d'un fluide gazeux, le collecteur (11) comprenant un volume d'échantillonnage (10) ;
un orifice d'entrée d'échantillonnage (14) agencé dans le collecteur (11), l'orifice d'entrée d'échantillonnage (14) comprenant un orifice d'entrée en trou d'aiguille agencé de façon à collecter des échantillons du fluide gazeux à partir du volume d'échantillonnage (10) et à fournir les échantillons à l'appareil d'analyse (53), dans lequel le flux transporte des matières particulaires ; et
un directeur de flux agencé de façon à créer un flux circulatoire du fluide gazeux autour du collecteur (11), ledit flux circulatoire encerclant l'orifice d'entrée d'échantillonnage (14) afin de faire varier par conséquent une distribution spatiale des matières particulaires transportées par le fluide pour augmenter une proportion relative des matières particulaires transportées par-devant l'orifice d'entrée d'échantillonnage (14) sans entrer dans le volume d'échantillonnage (10).

2. Orifice d'entrée de détecteur (1) de la revendication 1, dans lequel le volume (11) est agencé de façon à diriger le flux de fluide dans une direction de flux et de sorte que le flux circulatoire circule autour d'un axe de rotation qui est transversal à la direction de flux en vrac, par exemple dans lequel le directeur de flux comprend un orifice d'entrée de flux (2) vers le collecteur (11) et un orifice de sortie de flux (4) à partir du collecteur (11), l'orifice de sortie de flux (4) étant aligné pour transporter le flux dans une direction qui est transversale à une direction de flux allant dans le collecteur (11) à partir de l'orifice d'entrée, par exemple dans lequel l'orifice d'entrée de flux (2) a une coupe transversale plus petite que l'orifice de sortie de flux (4) .

3. Orifice d'entrée de détecteur (1) de n'importe quelle revendication précédente, dans lequel le directeur de flux comprend une paroi incurvée du collecteur (11) agencée de sorte que le flux circulatoire suive une surface interne de la paroi incurvée du collecteur (11), par exemple dans lequel la variation de la distribution spatiale de matières particulaires transportées par le flux comprend la diminution de la proportion relative des matières particulaires transportées par le flux avec la distance par rapport à la paroi incurvée du collecteur (11) .

4. Orifice d'entrée de détecteur (1) de n'importe quelle revendication précédente, dans lequel le collecteur (11) est agencé de façon à diriger le flux de fluide gazeux dans une direction de flux en vrac et est configuré de sorte que le flux circulatoire circule autour d'un axe de rotation qui est aligné avec la direction de flux en vrac, par exemple dans lequel le collecteur (11) comprend un cylindre et l'axe de rotation est aligné avec un axe longitudinal du cylindre, par exemple dans lequel le directeur de flux comprend un orifice d'entrée de flux (2) vers le collecteur (11) et un orifice de sortie de flux (4) à partir du collecteur (11), et l'orifice d'entrée de flux (2) et l'orifice de sortie de flux (4) sont espacés l'un de l'autre dans la direction de flux en vrac.

5. Orifice d'entrée de détecteur (1) de n'importe quelle revendication précédente, dans lequel le directeur de flux comprend une structure qui est alignée avec un trajet hélicoïdal dans le collecteur (11), par exemple dans lequel la structure comprend une ailette ou une rainure dans la paroi du collecteur (11).

6. Orifice d'entrée de détecteur (1) de n'importe lesquelles des revendications 1 à 5 dans lequel le directeur de flux comprend un dispositif de déplacement agencé de façon à déplacer un fluide gazeux autour du flux circulatoire, par exemple dans lequel le dispositif de déplacement est agencé de façon à souffler un jet de fluide gazeux autour d'une surface interne d'une paroi du collecteur (11).

7. Orifice d'entrée de détecteur (1) de n'importe quelle revendication précédente, comprenant en outre au moins un élément parmi :
un dispositif de chauffage pour chauffer le fluide gazeux dans le passage de flux (32) ; et
un trajet de fluide additionnel configuré pour diriger le fluide gazeux additionnel dans le flux afin de créer le flux circulatoire.

8. Détecteur comprenant un appareil d'analyse (53) pour détecter une substance d'intérêt et un orifice d'entrée de détecteur (1) selon n'importe quelle revendication précédente agencé de façon à fournir des échantillons du fluide gazeux à l'appareil d'analyse (53).

9. Orifice d'entrée de détecteur (1) pour fournir un échantillon à un appareil d'analyse (53) afin de détecter une substance d'intérêt, l'orifice d'entrée de détecteur (1) comprenant :
un passage de flux (32) pour transporter un flux inhalé de fluide gazeux dans une direction de flux en vrac, le passage de flux (32) comprenant un volume d'échantillonnage (24) ;
un orifice d'entrée d'échantillonnage (14) comprenant un orifice d'entrée en trou d'aiguille conçu pour collecter des échantillons du fluide à partir du volume d'échantillonnage (24) et pour fournir les échantillons à l'appareil d'analyse (53) ; et
un directeur de flux agencé de façon à créer un flux circulatoire du fluide gazeux autour du passage de flux (32), dans lequel le flux circulatoire a un axe de rotation qui est aligné avec la direction de flux en vrac, ledit flux circulatoire encerclant l'orifice d'entrée d'échantillonnage (14) afin de faire varier par conséquent une distribution spatiale de matières particulaires transportées par le fluide pour augmenter une proportion relative des matières particulaires transportées par-devant l'orifice d'entrée d'échantillonnage (14) sans entrer dans le volume d'échantillonnage (24).

10. Orifice d'entrée de détecteur (1) de la revendication 9, dans lequel le directeur de flux comprend une surface configurée pour modifier une direction du flux de fluide gazeux afin de créer le flux circulatoire, par exemple dans lequel la surface comprend une rainure ou une ailette, par exemple dans lequel le directeur de flux comprend un trajet de fluide additionnel configuré pour délivrer un flux additionnel de fluide gazeux dans le flux inhalé afin de provoquer le flux circulatoire, par exemple dans lequel le directeur de flux comprend un orifice d'entrée de flux (2) vers le passage de flux (32) et un orifice de sortie de flux (4) à partir du passage de flux (32), et l'orifice d'entrée de flux (2) et l'orifice de sortie de flux (4) sont espacés l'un de l'autre le long de la direction de l'axe de rotation, par exemple dans lequel l'orifice de sortie de flux (4) comprend un premier orifice de sortie de flux (4) et un deuxième orifice de sortie de flux (4), et l'orifice d'entrée d'échantillonnage (14) est agencé entre le premier orifice de sortie de flux (4) et le deuxième orifice de sortie de flux (4), par exemple dans lequel le premier orifice de sortie de flux (4) et le deuxième orifice de sortie de flux (4) sont au moins partiellement alignés avec la direction de flux.

11. Procédé de détection d'une substance d'intérêt, le procédé comprenant :
le fait de fournir un flux de fluide gazeux le long d'un passage de flux (32) dans une direction de flux, le passage de flux (32) incluant un volume d'échantillonnage (24) ;
le fait d'obtenir des échantillons du fluide gazeux à travers un orifice d'entrée d'échantillonnage (14) comprenant un orifice d'entrée en trou d'aiguille à partir du volume d'échantillonnage (24) et le fait de fournir les échantillons à un détecteur pour détecter la substance d'intérêt ; et
le fait d'induire un flux circulatoire du fluide gazeux autour du passage de flux (32), ledit flux circulatoire encerclant l'orifice d'entrée d'échantillonnage (14) afin de faire varier par conséquent une distribution spatiale de matières particulaires transportées par le fluide pour augmenter une proportion relative des matières particulaires transportées par-devant l'orifice d'entrée d'échantillonnage (14) sans entrer dans le volume d'échantillonnage (24).

12. Procédé de la revendication 11, dans lequel le passage de flux (32) comprend un collecteur (11) ayant une paroi incurvée et le flux circulatoire du fluide gazeux suit une surface interne de la paroi incurvée, par exemple dans lequel le flux circulatoire fait varier la distribution spatiale de matières particulaires transportées par le flux de sorte que la proportion relative des matières particulaires transportées par le flux autour du collecteur (11) diminue avec la distance par rapport à la paroi incurvée du collecteur (11), par exemple dans lequel la paroi incurvée dirige le flux de fluide gazeux dans une direction de flux en vrac et le flux circulatoire circule autour d'un axe de rotation qui est aligné avec la direction de flux en vrac, par exemple dans lequel le collecteur (11) comprend un cylindre et l'axe de rotation est aligné avec un axe longitudinal du cylindre, par exemple dans lequel le flux de fluide gazeux s'écoule à partir d'un orifice d'entrée de flux (2) jusqu'à un orifice de sortie de flux (4), et l'orifice d'entrée de flux (2) et l'orifice de sortie de flux (4) sont espacés l'un de l'autre dans la direction de l'axe longitudinal du cylindre.

13. Procédé de la revendication 11, dans lequel le flux de fluide s'écoule dans une direction de flux et le flux circulatoire circule autour d'un axe de rotation qui est transversal à la direction de flux, par exemple dans lequel le flux de fluide s'écoule à partir d'un orifice d'entrée de flux (2) vers un orifice de sortie de flux (4) et l'orifice de sortie de flux (4) transporte le flux dans une direction qui est transversale à une direction de flux provenant de l'orifice d'entrée de flux (2), par exemple dans lequel le flux de fluide dans l'orifice d'entrée de flux (2) est plus rapide que le flux de fluide dans l'orifice de sortie de fluide (4).

14. Procédé de n'importe lesquelles des revendications 11 à 13, comprenant en outre le chauffage de l'échantillon dans le passage de flux (32).

15. Procédé de n'importe lesquelles des revendications 11 à 14, comprenant en outre la fourniture d'un flux additionnel de fluide gazeux dans le trajet du passage de flux (32) afin de créer le flux circulatoire.
